(19) Europäisches Patentamt
European Patent Office
Office européen des brevets

(11) **EP 1 478 525 B1**

(12) **FASCICULE DE BREVET EUROPEEN**

(45) Date de publication et mention
de la délivrance du brevet:
**25.09.2013 Bulletin 2013/39**

(51) Int Cl.:
***B60C 23/04*** *(2006.01)*

(21) Numéro de dépôt: **03718904.0**

(86) Numéro de dépôt international:
**PCT/FR2003/000571**

(22) Date de dépôt: **20.02.2003**

(87) Numéro de publication internationale:
**WO 2003/070495 (28.08.2003 Gazette 2003/35)**

(54) **ENSEMBLE D'UN CAPTEUR DE PRESSION A MODULE DE REVEIL ET D'UN MICROPROCESSEUR DE MESURE ET DE COMMANDE**

ANORDNUNG VON EINEM DRUCKSENSOR MIT EINEM WACHMODUL UND EINEM MIKROPROZESSOR ZUR MESSUNG UND FÜHRUNG

PRESSURE SENSOR ASSEMBLY WITH CLOCK MODULE AND MEASURING AND MONITORING MICROPROCESSOR

(84) Etats contractants désignés:
**DE ES FR GB IT**

(30) Priorité: **21.02.2002 FR 0202201**

(43) Date de publication de la demande:
**24.11.2004 Bulletin 2004/48**

(73) Titulaire: **JOHNSON CONTROLS AUTOMOTIVE ELECTRONICS**
**95526 Cergy Pontoise Cédex (FR)**

(72) Inventeur: **DELAPORTE, Francis**
**F-95520 Osny (FR)**

(74) Mandataire: **Bloch, Gérard et al**
**Gevers France**
**41, Avenue de Friedland**
**75008 Paris (FR)**

(56) Documents cités:
**WO-A1-94/06640      US-A- 5 656 993**
**US-A- 5 783 992**

**Description**

La présente invention concerne les capteurs de pression des pneumatiques de véhicules automobiles.

Pour assurer la sécurité des véhicules automobiles, leurs pneumatiques sont équipés de capteurs de pression reliés par radio au calculateur d'habitacle, pour signaler toute anomalie. Le capteur, logé à l'intérieur du pneumatique, est alimenté par une pile. Afin de préserver l'autonomie de la pile du capteur, inaccessible, celui-ci ne fonctionne que cycliquement, c'est-à-dire qu'il comporte un circuit temporisateur, de réveil, à très faible consommation, qui réveille cycliquement, pour une courte durée, un microprocesseur de mesure de la pression et de la température et d'émission radio de ces mesures.

Une jante portant le capteur peut atteindre des températures élevées, en cas de freinages intensifs répétés, et le microprocesseur du capteur est alors porté à une température d'une centaine de degrés Celcius.

Cette température dépasse la limite garantie de bon fonctionnement des circuits intégrés de la classe industrielle. Il existe bien des circuits intégrés de classe militaire, à plage de température de fonctionnement plus large, mais leur coût est évidemment plus élevé.

Il s'agissait donc de trouver une solution pour éviter le risque de destruction thermique des circuits par un fonctionnement en dehors de leur plage thermique.

Une solution antérieure, présentée dans la demande FR 00 12 657, propose un capteur de pression de pneumatique de véhicule automobile comportant un module de réveil d'un microprocesseur de mesure et de commande de circuits d'émission radio et des moyens d'inhibition sensibles à la température pour inhiber le module de réveil. Cette solution consiste à utiliser le module de réveil comme interrupteur de fonctionnement du microprocesseur, de sorte que le fonctionnement cyclique n'a seulement lieu que si la température n'excède pas un seuil déterminé.

L'inconvénient majeur de ce système provient de la difficulté à régler le seuil et la période du cycle en fonction, principalement, des circuits intégrés utilisés, des spécifications des constructeurs, des réglages de montage et/ou d'utilisation.

La demanderesse a tout d'abord cherché à s'affranchir de cette difficulté tout en améliorant le fonctionnement du capteur, sans en augmenter le coût.

Par ailleurs, les véhicules automobiles sont assemblés sur des chaînes automatiques de montage de véhicules sur lesquelles il est prévu une étape manuelle d'apprentissage, dans le calculateur de bord du véhicule, des numéros d'identification des roues et de leur localisation correspondante sur le véhicule. Cette opération manuelle est ordinairement effectuée sur une station de diagnostic intégrée aux chaînes de montage des véhicules et de montage des roues de ces véhicules, compte-tenu du fait qu'à la position d'une roue dans la chaîne de montage de roues correspond une localisation précise de la roue sur le véhicule.

La demanderesse a aussi cherché à faire en sorte que les capteurs de pression permettent l'automatisation de cette étape d'apprentissage d'identification des capteurs et de la localisation des roues correspondantes dans le calculateur de bord du véhicule correspondant.

Plus précisément, elle a cherché à proposer un capteur de pression qui soit réglable et compatible avec la cadence élevée du montage des roues et des véhicules sur leurs chaînes de montage respectives.

A cet effet, l'invention concerne un ensemble de pression de pneumatique de roue de véhicule automobile et d'un microprocesseur de mesure de pression et de commande d'un circuit d'émission radio, le capteur comportant un module de réveil du microprocesseur associé à un cadenceur de commande de réveil, caractérisé par le fait que le cadenceur est programmable et il est prévu des moyens pour le programmer.

On s'affranchit de l'utilisation d'un seuil pour contrôler le fonctionnement du module de réveil en modulant directement la cadence de réveil du microprocesseur par programme.

De préférence, le microprocesseur est agencé pour programmer le cadenceur.

L'invention est notamment remarquable par le fait que les moyens nécessaires au réveil du microprocesseur sont situés dans le microprocesseur lui-même.

Dans une première forme de réalisation, le cadenceur est monté dans le capteur de pression et est agencé pour commander le module de réveil de période variable.

Dans une deuxième forme de réalisation, le cadenceur est monté dans le microprocesseur (4) et est agencé pour être commandé par le module de réveil de période fixe.

D'autres caractéristiques et avantages apparaitront plus clairement dans la description détaillée ci-après de deux formes de réalisation de l'invention, faite en référence au dessin annexé sur lequel

-  la figure 1 représente un schéma des blocs fonctionnels de la première forme de réalisation du capteur de pression et du microprocesseur de l'invention ;
-  la figure 2 représente un synoptique simplifié de chaînes de montage de véhicules et de roues sur lesquelles sont montés des capteurs comme celui de la figure 1 et
-  la figure 3 représente un schéma d'une partie des blocs fonctionnels de la deuxième forme de réalisation du capteur de pression et du microprocesseur de l'invention.

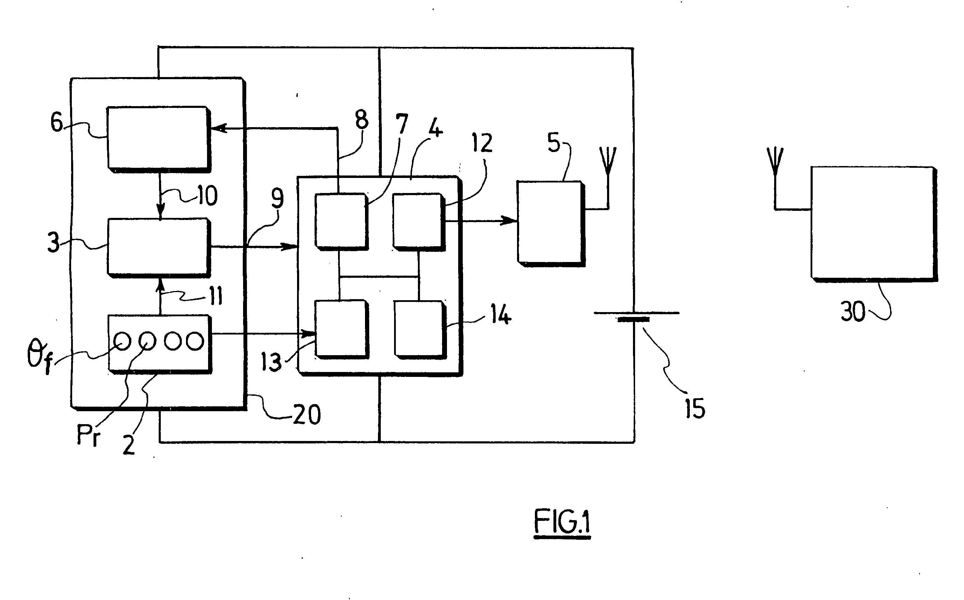

Dans la première forme de réalisation de la figure 1, le capteur de pression de pneumatique 20 est associé à une pile d'alimentation 15, un microprocesseur 4 de mesure, également alimenté par la pile 15, capable de collecter, par une fonction de scrutation 13, et de traiter, grâce à un superviseur 12, des mesures de grandeurs physiques dont la pression du pneumatique Pr, la température de fonctionnement $\theta_f$ et d'autres paramètres indicateurs concernant la rotation de la roue, par exemple la vitesse de rotation $V_r$ ou la force centrifuge $F_r$. Ces grandeurs physiques sont captées par un ensemble 2 de microcapteurs, respectivement membrane manométrique, thermistance, microgyroscope ou microaccéléromètre ou rolling switch. Le superviseur 12 du microprocesseur 4 commande un circuit d'émission radio 5 pour communiquer, au calculateur de bord 30 du véhicule, en temps utile, l'identification ID du capteur, les mesures collectées, et éventuellement certains résultats des traitements effectués, ces données étant organisées selon une trame prédéterminée pour être émises.

Un module de réveil 3, dans le capteur de pression 20, relié au microprocesseur 4 par une liaison 9, lance le fonctionnement de ce dernier cycliquement, avec une période T imposée par un cadenceur 6 de commande de réveil monté dans le capteur 20 relié au module de réveil 3 par une liaison 10. La période T est calculée par une fonction de cadencement 7 du microprocesseur 4 pour programmer le cadenceur 6 par une liaison 8. Dans l'exemple de réalisation proposée, la fonction 7 fait partie du microprocesseur 4. Le module de réveil 3 reçoit aussi des informations de pression et/ou de rotation de la roue depuis l'ensemble 2 de microcapteurs.

La fonction de cadencement 7 reçoit de la fonction de scrutation 13 et par l'intermédiaire du superviseur 12 les valeurs des grandeurs physiques dont elle a besoin pour calculer la période T à imposer au module de réveil.

Il faut maintenant aborder l'organisation des chaînes de montage des roues et des véhicules.

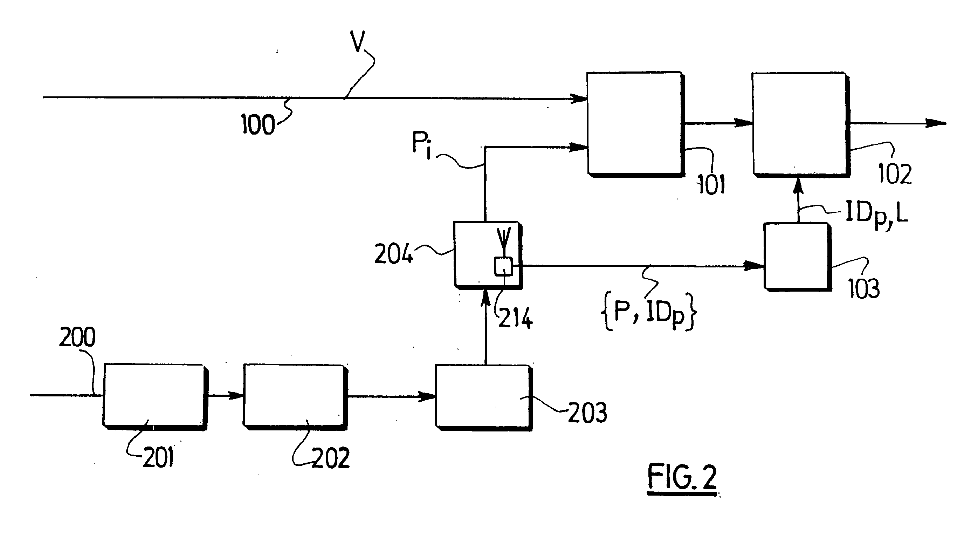

En référence à la figure 2, sur la chaîne 100 de montage des véhicules, est monté le véhicule de numéro ou de rang V de la chaîne. Parallèlement, sur la chaîne 200 de montage des roues, sont montées les roues du véhicule V, dont les numéros ou rangs, successifs, Pi = Po + i (i étant un nombre entier de 0 à 4) dans la chaîne sont en relation biunivoque avec le numéro V du véhicule sur lequel elles seront montées au poste 101. Par exemple, la première roue montée sur le véhicule V est tel que :

$$Po = 5 \times V - 4$$

l'entier i étant indicateur de la localisation L de la roue Po + i sur le véhicule V.

Par exemple, on peut considérer i = 1, si la roue est localisée à l'avant gauche du véhicule, i = 0 s'il s'agit de la roue de secours, etc...

Autrement dit, dans cet exemple, on déduit, de la position Pi de la roue sur la chaîne de montage des roues, son affectation au véhicule V, sa localisation L sur le véhicule V de la chaîne de montage des véhicules en calculant l'entier i comme suit :
avec

$$\left.\begin{array}{l} i = Pi - 5 \times V + 4 \\ 0 \leq i \leq 4 \end{array}\right\} \quad (1)$$

Alors, sur la chaîne de montage des roues, après une étape 201 de montage des capteurs de pression et une étape 202 de montage des pneumatiques sur les jantes, on passe à une étape de gonflage 203 et une étape 204 d'équilibrage des roues. Ces opérations sont très rapides. Ainsi, l'équilibrage dure seulement quelques secondes. Lors de cette dernière étape d'équilibrage des roues sont relevés le numéro Pi de la roue et le numéro d'identification IDp du capteur de pression de la roue, ce dernier par un récepteur 214 de la façon expliquée plus loin. Ces deux paramètres sont transmis à un poste de diagnostic 103 qui enregistre que la roue Pi est équipée d'un capteur de pression d'identification IDp. Quand le véhicule n° V, à une étape 102, arrive au poste de diagnostic 103 pour apprentissage de son calculateur de bord, le poste 103 déduit que le véhicule V est équipé des roues Pi = 5 V- 4 + i avec $0 \leq i \leq 4$ (2) d'identification IDp et de localisation L correspondant à l'entier i.

Le fonctionnement du capteur de pression 20, depuis son installation sur la chaîne de montage des roues jusqu'à son utilisation courante, va maintenant être décrit.

En début de chaîne de montage des roues, la pile 15 alimente les éléments électronique, mais ils se trouvent dans un mode dit de stockage et le courant consommé est très faible (inférieur à 100 nA). En mode stockage, le capteur réveille le microprocesseur suivant une période déterminée pour qu'il lise la valeur de pression, valide le mode et retourne en mode dormant. Dans ce mode, le circuit d'émission est toujours en mode dormant.

Tant que le microprocesseur 4 ne détecte pas de différence de pression, le mode de stockage est maintenu. Sous l'action d'un microcapteur de pression, typiquement une membrane manométrique de l'ensemble 2, si la pression dépasse un certain seuil (ici 0,7 bars), du mode stockage on passe au mode parking et le système devient actif. En mode parking, la période de réveil peut être par exemple d'une heure. Incidemment, on notera qu'en mode driving (route), la période peut être d'une minute.

A une étape prédéterminée de la chaîne de montage des roues, on est en mesure de transmettre automatiquement à la chaîne 100 de montage des véhicules la position Pi de la roue sur laquelle le capteur de pression est monté.

L'étape prédéterminée de la chaîne de montage des roues dont il est question ici peut être l'étape 203 de mise en pression du pneumatique (gonflage) ou, de préférence, l'étape 204 d'équilibrage roues. A cette étape, la période de réveil peut être très courte (par exemple 1 s). Selon le cas, l'information issue du microcapteur de pression Pr (membrane manométrique) ou de rotation (microgyro) Vr ou encore de force centrifuge Fr (rolling switch, microaccéléromètre), est transmise au module de réveil 3 par la liaison 11 depuis l'ensemble 2 des microcapteurs, ce qui provoque le réveil du microprocesseur 4 par la liaison 9. Les liaisons 8, 9, 10 peuvent être conformes au protocole SPI (Synchronous Protocole Interface). Le superviseur 12 du microprocesseur lance la fonction de scrutation 13, en reçoit les mesures $P_r$, $\theta_f$, $V_r$, qu'il transmet à la fonction de cadencement 7 pour programmer le cadenceur 6.

La fonction 7 de cadencement consulte le contenu de la mémoire 14. Si ce contenu correspond à son mode stockage, on est en cours de montage et la fonction 7 de cadencement communique au cadenceur 6 une période $T_1$ d'émission de la trame prédéterminée contenant notamment le numéro d'identification ID du capteur compatible avec la cadence de montage des chaînes de montage, mémorise en mémoire 14 le nouvel état de fonctionnement du capteur correspondant à la phase de montage, puis remet le microprocesseur 4 dans son état dormant.

Par la suite, le cadenceur 6 active à la période $T_1$ le module de réveil 3 pour réveiller le microprocesseur 4, lequel, compte tenu de l'état de la mémoire 14 et par l'intermédiaire du superviseur 12, commande le circuit d'émission 5, pour émettre la trame prédéterminée, puis retourne à son état dormant.

La période $T_1$ est très courte, de l'ordre de quelques dizièmes de secondes, et les trames 204 correspondantes sont par exemple émises pendant la durée recouvrant le temps d'exécution de l'étape d'équilibrage de la roue sur la chaîne de montage des roues, de façon à éviter toute ambiguïté avec les roues qui précèdent ou qui suivent dans la chaîne de montage. Sur le poste 204 d'équilibrage de roues, traitant la roue de position P dans la chaîne de montage des roues 200 est prévu un récepteur radio 214 recevant la trame prédéterminée émise par le capteur de pression de la roue P et contenant notamment l'identification IDp dudit capteur. Le récepteur radio 214 élabore un message contenant les données P et IDp qu'il communique à la station de diagnostic 103 en charge de l'apprentissage du calculateur de bord des véhicules de rang V sur la chaîne de montage 100 des véhicules. La station de diagnostic 103 déduit pour chaque véhicule V quelles sont les roues P devant l'équiper par exemple par les formules (2) et à quelle localisation L ces roues P de capteur IDp sont affectées, par exemple par les formules (1). Le récepteur radio 214 initialise la station de diagnostic 103 qui programmera le calculateur de bord du véhicule V quand celui-ci se présentera sur le poste d'apprentissage 102.

L'intervalle du temps d'émission de la trame à la période $T_1$ peut être déterminée par la détection de la rotation de la roue par l'ensemble 2. Le capteur de pression est alors mis dans son mode parking par le microprocesseur 4, le cadenceur étant réglé sur une période $T_2$ d'environ une heure.

En utilisation courante du véhicule, ce mode parking est interrompu dès que la roue est de nouveau mise en rotation, le processus reste le même, mais l'état de la mémoire 14 révèle que l'on n'est plus en cours de montage et la fonction 7 de cadencement calcule une période $T_2$ non prédéterminée cette fois, mais qui dépend de mesures collectées par la fonction de scrutation 13, principalement de la température $\theta_f$ du pneumatique.

Pour une température $\theta_f$ normale, la période $T_2$ est fixée à quelques secondes.

Si la température $\theta_f$ devient excessive à cause, par exemple, de l'échauffement des pneumatiques résultant de freinages répétés, la période $T_2$ peut être portée à près de 2000 secondes. On voit que pendant ce temps, la température peut redescendre. C'est pour cela qu'il peut être avantageux de réveiller le microprocesseur prématurément et d'activer la fonction 7 de cadencement pour modifier la période de réveil. A cet effet, le module de réveil 3 est sensible à un gradient de la température $\theta_f$ par la liaison 11 et réveille le microprocesseur 4 si la température $\theta_f$ varie d'un certain pourcentage dans la durée d'une période $T_2$.

On a décrit ci-dessus, une forme de réalisation dans laquelle le cadenceur de commande de réveil 6 se trouvait dans le capteur de pression, hors du microprocesseur 4, et pouvait être programmé par le microprocesseur 4, le module de réveil 3 étant commandé par le cadenceur programmable 6 pour réveiller périodiquement le microprocesseur suivant une période variable.

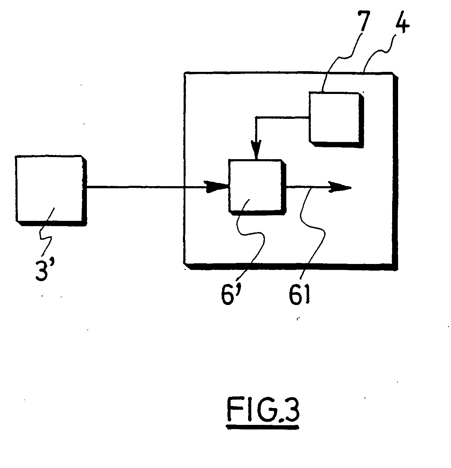

Dans une autre forme de réalisation, dont on ne décrira que les éléments qui la distinguent de la première, en référence à la figure 3, le module de réveil 3' a ici une période fixe T (par exemple une seconde). Le cadenceur de commande de réveil 6' se trouve à l'intérieur du microprocesseur 4. Il reste un cadenceur programmable par la fonction de cadencement 7 du microprocesseur, mais c'est le module de réveil 3' qui le commande pour que, par sa sortie 61, il réveille périodiquement le microprocesseur 4 suivant une période variable P, pouvant par exemple varier de 1 seconde à 2 000 secondes, voir 65 536 secondes, s'il s'agit d'un cadenceur à $2^{16}$ bits. Ainsi, si la période du module de réveil 3' est de 1 s, le capteur de pression incrémentera le cadenceur 6' d'une unité à chaque seconde et, si la fonction de cadencement 7 a été "programmée à 8" par exemple, le réveil du microprocesseur interviendra toutes les huit secondes, c'est-à-dire toutes les huit impulsions du module de réveil. Le cadenceur 6' joue ici un rôle de diviseur de fréquence (multiplicateur de période).

On notera que dans le cas de cette deuxième forme de réalisation, les microcapteurs 2 ne sont pas reliés au module de réveil 3'.

## Revendications

1. Ensemble d'un capteur (20) de pression de pneumatique de roue de véhicule automobile et d'un microprocesseur (4) de mesure de pression et de commande d'un circuit d'émission radio (5), le capteur comportant un module de réveil du microprocesseur (4) associé à un cadenceur (6; 6') de commande de réveil, **caractérisé par le fait que** le cadenceur (6; 6') est programmable et il est prévu des moyens (4, 7, 12-14) pour le programmer.

2. Ensemble selon la revendication 1, dans lequel le microprocesseur (4, 7, 12-14) est agencé pour programmer le cadenceur (6; 6').

3. Ensemble selon l'une des revendications 1 et 2, dans lequel les moyens (7, 12-14) pour programmer le cadenceur (6, 6') sont sensibles à la température du pneumatique ($\theta_f$).

4. Ensemble selon l'une des revendication 1 à 3, dans lequel les moyens (7, 12-14) pour programmer le cadenceur (6. 6') sont sensibles à la pression (P) du pneumatique.

5. Ensemble selon l'une des revendications 1 à 4, dans lequel les moyens (7, 12-14) pour programmer le cadenceur sont sensibles à la vitesse de rotation ($V_r$) ou à la force centrifuge ($F_r$) provoquée par la rotation de la roue.

6. Ensemble selon la revendication 5, dans lequel les circuits d'émission radio (5) sont agencés pour émettre des trames contenant au moins l'identification du capteur à une cadence accélérée pendant l'équilibrage de la roue correspondante en cours de montage et à une cadence ralentie lorsque la température de la roue correspondante augmente.

7. Ensemble selon l'une des revendications 1 à 6, dans lequel, le cadenceur (6) est monté dans le capteur de pression (20) et est agencé pour commander le module de réveil (3) de période variable.

8. Ensemble selon l'une des revendications 1 à 6, dans lequel le cadenceur (6') est monté dans le microprocesseur (4) et est agencé pour être commandé par le module de réveil (3') de période fixe.

**Patentansprüche**

1. Anordnung eines Reifendrucksensors (20) eines Rades eines Kraftfahrzeugs und eines Mikroprozessors (4) zur Messung des Drucks und zur Steuerung eines Funkübertragungsschaltkreises (5), wobei der Sensor ein Weckmodul des Mikroprozessors (4) aufweist, das mit einem Zeitgeber (6; 6') des Weckbefehls verbunden ist, **dadurch gekennzeichnet, dass** der Zeitgeber (6; 6') programmierbar ist und Mittel (4, 7, 12-14) vorgesehen sind, um ihn zu programmieren.

2. Anordnung nach Anspruch 1, wobei der Mikroprozessor (4, 7, 12-14) eingerichtet ist, um den Zeitgeber (6; 6') zu programmieren.

3. Anordnung nach einem der Ansprüche 1 und 2, wobei die Mittel (7, 12-14) zum Programmieren des Zeitgebers (6; 6') auf die Temperatur des Reifens ($\theta_f$) reagieren.

4. Anordnung nach einem der Ansprüche 1 bis 3, wobei die Mittel (7, 12-14) zum Programmieren des Zeitgebers (6; 6') auf den Druck des Reifens (P) reagieren.

5. Anordnung nach einem der Ansprüche 1 bis 4, wobei die Mittel (7, 12-14) zum Programmieren des Zeitgebers auf die Drehzahl ($V_r$) oder die Zentrifugalkraft ($F_r$) reagieren, die durch Drehung des Rades bewirkt wird.

6. Anordnung nach Anspruch 5, wobei die Funkübertragungsschaltkreise (5) eingerichtet sind, um Rahmen zu senden, die mindestens die Identifikation des Sensors bei einer beschleunigten Geschwindigkeit beim Auswuchten des entsprechenden Rades während der Montage und bei einer langsamen Geschwindigkeit, wenn die Temperatur des entsprechenden Rades zunimmt, beinhalten.

7. Anordnung nach einem der Ansprüche 1 bis 6, wobei der Zeitgeber (6) in dem Drucksensor (20) montiert ist und eingerichtet ist, um das Weckmodul (3) mit variabler Periode zu steuern.

8. Anordnung nach einem der Ansprüche 1 bis 6, wobei der Zeitgeber (6') in dem Mikroprozessor (4) montiert ist und eingerichtet ist, um durch das Weckmodul (3') mit fester Periode gesteuert zu werden.

**Claims**

1. Assembly comprising a motor vehicle tyre pressure sensor (20) and a microprocessor (4) for measuring pressure and controlling a radio transmission circuit (5), the sensor comprising a module for activating the microprocessor (4) associated with an activation control timer (6; 6'), **characterised in that** the timer (6; 6') is programmable and means (4, 7, 12-14) are provided for programming it.

2. Assembly according to claim 1, wherein the microprocessor (4, 7, 12-14) is adapted to programme the timer (6; 6').

**3.** Assembly according to one of claims 1 and 2, wherein the means (7, 12-14) for programming the timer (6; 6') are sensitive to the temperature of the tyre ($\theta_f$).

**4.** Assembly according to one of claims 1 to 3, wherein the means (7, 12-14) for programming the timer (6; 6') are sensitive to the pressure (P) of the tyre.

**5.** Assembly according to one of claims 1 to 4, wherein the means (7, 12-14) for programming the timer are sensitive to the speed of rotation ($V_r$) or the centrifugal force ($F_r$) produced by the rotation of the wheel.

**6.** Assembly according to claim 5, wherein the radio transmission circuits (5) are adapted to broadcast information containing at least an identification of the sensor at an accelerated rate during the balancing of the corresponding wheel being fitted and at a slower rate when the temperature of the corresponding wheel increases.

**7.** Assembly according to one of claims 1 to 6, wherein the timer (6) is mounted in the pressure sensor (20) and is adapted to control the variable-period activation module (3).

**8.** Assembly according to one of claims 1 to 6, wherein the timer (6') is mounted in the microprocessor (4) and is adapted to be controlled by the fixed-period activation module (3').

FIG.1

EP 1 478 525 B1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0012657